(19) Europäisches Patentamt
European Patent Office
Office européen des brevets

(11) Veröffentlichungsnummer: **0 103 253**
**B1**

(12) # EUROPÄISCHE PATENTSCHRIFT

(45) Veröffentlichungstag der Patentschrift:
**09.12.87**

(21) Anmeldenummer: **83108752.3**

(22) Anmeldetag: **06.09.83**

(51) Int. Cl.⁴: **C 08 F 218/10,** C 09 D 5/34,
C 09 J 3/14 // (C08F218/10,
220:18, 220:06)

(54) **Bindemittel für Baukleber, Spachtelmassen und Putze auf Basis von halogenfreien Emulsionscopolymerisaten von monoolefinisch ungesättigten Carbonsäureestern.**

(30) Priorität: **11.09.82 DE 3233840**

(43) Veröffentlichungstag der Anmeldung:
**21.03.84 Patentblatt 84/12**

(45) Bekanntmachung des Hinweises auf die Patenterteilung:
**09.12.87 Patentblatt 87/50**

(84) Benannte Vertragsstaaten:
**AT BE DE FR GB NL SE**

(56) Entgegenhaltungen:
**CH - A - 464 533**
**DE - B - 1 176 863**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft, Carl-Bosch-Strasse 38, D-6700 Ludwigshafen (DE)**

(72) Erfinder: **Gellert, Roland, Dr., 8 Taylor Road, Marlborough, N.J. 07746 (US)**
Erfinder: **Matthaei, Lothar, Am Westring, D-6714 Weisenheim (DE)**
Erfinder: **Melan, Michael, Dr., Hans-Willmann-Strasse 4, D-6706 Wachenheim (DE)**
Erfinder: **Kerckow, Albrecht, Dr., In den Weingaerten 3, D-6706 Wachenheim (DE)**
Erfinder: **Peters, Karl-Clemens, Dr., Otto-Schmidt-Gross-Strasse 4, D-6702 Bad Duerkheim (DE)**
Erfinder: **Wistuba, Eckehardt, Dr., Im Obergarten 7, D-6702 Bad Duerkheim (DE)**
Erfinder: **Wulgaris, Savas, Dr., Kranichstrasse 7, D-6700 Ludwigshafen (DE)**

## Beschreibung

Für Baukleber, Spachtelmassen und Putze werden in der Praxis in grossem Umfang wässrige Polymer-Dispersionen eingesetzt. Besondere Anforderungen werden dabei an solche Baukleber, Spachtelmassen und Putze gestellt, die im Zusammenhang mit der Wärmedämmung von Gebäuden, insbesondere bei Vollwärmeschutz-Massnahmen, eingesetzt werden. Dabei werden Wärmedämmplatten, z.B. Polystyrol-Hartschaumplatten, z.B. auf Fassadenflächen aufgeklebt und dann mit einer Spachtelmasse, Armierungsgewebe und Kunststoffputzen beschichtet. In manchen Fällen werden dabei Baukleber und Spachtelmassen mit Zementzusätzen eingesetzt (DE-OS 3 117 370).

Bekanntlich gehören Vollwärmeschutzsysteme zu den prüfzeichenpflichtigen Baustoffen, die die Anforderungen von DIN 4102 erfüllen müssen. Die für die Deckbeschichtung, d.h. für Putze und Anstriche, wegen ihrer guten Licht- und Witterungsbeständigkeit bevorzugt eingesetzten Polymer-Dispersionen auf Basis von (Meth)acrylsäureestern bzw. deren Copolymerisate mit Styrol, müssen daher unter Zusatz von Brandschutzmitteln verarbeitet werden. Die Polyvinylesterdispersionen bzw. Terpolymer-Dispersionen, die aus Vinylchlorid, Ethylen und Vinylacetat aufgebaut sind, sind zwar aufgrund des günstigen Brandverhaltens ihrer Filme für die Herstellung von Putzen und Anstrichen auch ohne Zusatz von Brandschutzmitteln geeignet, doch muss dieser Vorteil durch erhöhtes Vergilben, schnellere Verschmutzung und Verwitterung erkauft werden (vgl. DE-AS 10 92 656 und Fatipec-Kongress 1978, Seite 385). Ausserdem mehmen dérartige Bindemittel oft erhöhte Mengen Wasser auf, was gegebenenfalls zu Algenbewuchs führen kann. Schliesslich spalten die Vinylchlorid-haltigen Polymerisate bei Bränden Salzsäure ab, die zu sekundären Brandschäden führen kann. In der Praxis werden deshalb für die Deckbeschichtungen häufig Dispersionsmischungen, bestehend aus Styrol-Acrylsäureester-Copolymeren und Vinylchlorid-Ethylen-Vinylacetat-Copolymeren eingesetzt, während man für die Baukleber und Spachtelmassen, deren Bindemittel zementverträglich sein müssen, Vinylchlorid-Ethylen-Vinylacetat-Copolymere für sich einsetzt.

Aus Beispiel 1 der DE-AS 11 76 863 ist zwar ein Bindemittel für Anstrichfarben auf Basis eines Copolymerisats bekannt, das durch Emulsionscopolymerisation von überwiegenden Mengen Vinylpropionat mit Acrylsäure-tertiärbutylester und einem geringen Anteil Acrylsäure unter Verwendung eines mit 23 Mol Ethylenoxid umgesetzten und anschliessend mit Chlorsulfonsäure sulfierten Octadecylalkohols als Emulgator hergestellt ist, doch eignet sich diese Dispersion nicht als Bindemittel für Baukleber, Spachtelmassen und Putze, zumal sie bei Zusatz von Zement krümelige, praktisch nicht verarbeitbare Produkte ergibt.

In der Praxis werden daher u.a. aus Gründen der einfacheren Lagerhaltung Polymer-Dispersionen gewünscht, die sowohl für die Herstellung der Baukleber und Spachtelmassen als auch für die Herstellung von Putzen und Anstrichen geeignet sind und die im Brandfall keine Salzsäure abspalten, durch die die Löschmannschaft gefährdet und darüberhinaus sekundäre Schäden verursacht werden können.

Aufgabe der vorliegenden Erfindung sind dementsprechend Polymer-Dispersionen, die transparente, lichtechte, verseifungs- und witterungsbeständige Filme liefern und die andererseits für die Herstellung wasserfester verseifungsresistenter schwerentflammbarer, gegebenenfalls zementhaltiger, Kleber und Spachtelmassen geeignet sind, die sowohl gegenüber mineralischen Baustoffen, wie Beton und Mörtel, als auch gegenüber Schaumstoffen auf Basis von Polystyrol, starke adhesive Wechselwirkungen zeigen. Andererseits sollen sie aber auch für die Herstellung wasserfester, verseifungsresistenter, witterungs- und vergilbungsbeständiger, schwerentflammbarer Putze und Anstrichstoffe geeignet sein. Insbesondere sollen sie für Vollwärmeschutzsysteme, d.h. für die Befestigung und Beschichtung von Wärmedämmplatten bei der Isolierung von Gebäuden eingesetzt werden können und im Brandfall keinen Chlorwasserstoff abspalten.

Es wurde nun gefunden, dass halogenfreie Emulsionscopolymerisate von monoolefinisch ungesättigten Carbonsäureestern, die

a) 55 bis 72 Gew.% Vinylpropionat,
b) 44,9 bis 27,5 Gew.% tert.-Butylacrylat,
c) 0,1 bis 0,5 Gew.% (Meth)acrylsäure und
d) 0 bis 17,5 Gew.% eines monoolefinisch ungesättigten Carbonsäureesters aus der Gruppe Vinylacetat, Methylacrylat und -methacrylat, n- und iso-Butylacrylat und -methacrylat und Dibutylmaleinat

einpolymerisiert enthalten, wobei sich die Angaben in Gew.% auf die Gesamtmenge der Monomeren beziehen, mit besonderem Vorteil als Bindemittel für Baukleber, Spachtelmassen und Putze, insbesondere für Vollwärmeschutz-Systeme, geeignet sind.

Die Bindemittel der genannten Art sind vorzugsweise durch Copolymerisation der Monomeren a) bis c) und gegebenenfalls d) in wässriger Emulsion in Gegenwart von

e) 1,5 bis 4 Gew.% eines ethoxylierten Alkylphenols mit 8 bis 9 C-Atomen in der Alkylgruppe,
f) 0,75 bis 3 Gew.% eines sulfatierten ethoxylierten Alkylphenols mit 8 bis 9 C-Atomen in der Alkylgruppe und
g) 0,1 bis 0,5 Gew.% eines Celluloseethers

hergestellt, wobei sich die Angaben in Gew.% auf die Gesamtmenge der Monomeren beziehen und die Gesamtmenge der Monomeren im Bereich von 35 bis 65 Gew.%, bezogen auf die Summe der Menge an Monomeren, Dispergierhilfsmittel und Wasser liegt. Die Baukleber auf Basis der durch Emulsions-Copolymerisation aus den Monomeren a) bis d) hergestellten wässrigen Dispersionen, die die Dispergierhilfsmittel e) bis g) enthalten, können mit Vorteil auch für das Verkleben von Fliesen eingesetzt werden; sie sind mit besonderem Vorteil für das Verkleben von Wärmedämmplatten, beispielsweise auf Basis von Styrol-Polymerisaten sowie von Glasschaumplatten und Korkplatten, Schaumsilikatdämmplatten, Polyurethanhartschaumplatten und mineralischen Faserdämmstoffen, wie Fluswolle und Steinwolle geeignet. Sie können zudem als Bindemittel für Anstrichmittel eingesetzt werden.

Die Emulsionscopolymerisate werden in an sich üblicher Weise aus den Monomeren a) bis d) hergestellt, wobei man, wie üblich, im allgemeinen wasserlösliche Polymerisationsinitiatoren, wie besonders Ammoniumperoxidisulfat, Kaliumperoxidisulfat und Natriumperoxodisulfat, sowie übliche Redoxkatalysatoren aus Wasserstoffperoxid oder tert.Butylhydroperoxid als Oxidationskomponente und aus Natriumformaldehydsulfoxilat als Reduktionskomponente einsetzt. Die Polymerisationstemperatur kann dabei in weiten Bereichen variiert werden, doch arbeitet man im allgemeinen bei Temperaturen von 65 bis 85 °C. Die Gesamtmenge der Monomeren beträgt vorzugsweise 50 bis 60 Gew.%, bezogen auf die Gesamtmenge von Monomeren, Dispergierhilfsmittel und Wasser. Zur Verminderung von Restmonomeren kann nach Abschluss der Polymerisation mit Vorteil noch weiterer Katalysator zugesetzt und nachpolymerisiert werden. Man erhält Dispersionen, die meist Lichtdurchlässigkeitswerte von 40 bis 70, vorzugsweise von 50 bis 60%, und eine minimale Filmbildetemperatur von 8 bis 23, vorzugsweise von 12 bis 18 °C, aufweisen. Meist beträgt ihr pH-Wert 6 bis 9,5, vorzugsweise 7 bis 8,5. Er kann durch Zusatz von Ammoniak eingestellt sein.

Die ethoxylierten Alkylphenole e) haben vorzugsweise normal- oder iso-Octyl oder normal- oder iso-Nonylgruppen als Alkylreste. Ihr Ethoxylierungsgrad beträgt meist 8 bis 40, vorzugsweise 20 bis 30, Ethylenoxidreste je Molekül. Die sulfatierten ethoxylierten Alkylphenole weisen gleichfalls vorzugsweise normal- oder iso-Octyl oder normal- oder iso-Nonylgruppen als Alkylreste auf und enthalten gleichfalls im allgemeinen 8 bis 40, vorzugsweise 20 bis 30, Ethylenoxidreste je Molekül. Sie können gegebenenfalls in Form ihrer Alkalisalze, insbesondere ihrer Natriumsalze, eingesetzt werden.

Als Celluloseether g) kommt Methoxymethylcellulose und Ethoxymethylcellulose sowie Hydroxyethylcellulose in Betracht, vorzugsweise Hydroxyethylcellulose.

Die Bindemittel der genannten Art bilden beim Trocknen bei Raumtemperatur Filme, die bei 24stündiger Lagerung in Wasser bei 20 °C 16 bis 30, meist 20 bis 25% Wasser aufnehmen.

Die mit den Polymer-Dispersionen der genannten Art in sonst üblicher Weise hergestellten zementhaltigen Baukleber und Spachtelmassen besitzen eine Verarbeitungszeit von meist 4 bis 6 Stunden, binden nach dem Auftrag rasch ab und entwickeln, insbesondere auf geschäumtem Polystyrol sowie auf mineralischen Substraten sehr gute Haftfestigkeitswerte, die sich selbst durch Wassereinwirkung nicht wesentlich verändern.

Zur Herstellung der Kleber, Spachtelmassen und Putze sowie von Anstrichstoffen unter Verwendung der Polymer-Dispersionen der genannten Art können die hierfür üblichen Hilfsstoffe, Füllstoffe und Pigmente eingesetzt und die üblichen Mischvorrichtungen benutzt werden. Die Kleber, Spachtelmassen und Putze sowie Anstrichstoffe können in üblicher Weise verarbeitet werden. Im allgemeinen können die Polymer-Dispersionen der genannten Art als alleinige Bindemittel für die Baukleber, Spachtelmassen und Putze sowie auch für Anstrichstoffe eingesetzt werden.

Die in den folgenden Beispielen angegebenen Teile und Prozente beziehen sich auf das Gewicht.

Beispiel 1
A. Herstellung der Polymer-Dispersion

In einem mit Rührer, Thermometer, Rückflusskühler und Zulaufgefässen ausgestatteten Kessel wird ein Gemisch von 7,76 Teilen Wasser, 3,86 Teilen einer 20%igen wässrigen Lösung von ethoxyliertem p-Nonylphenol (Ethoxylierungsgrad 25), 1,22 Teilen einer 35%igen wässrigen Lösung von sulfatiertem, ethoxyliertem p-Nonylphenol (Ethoxylierungsgrad 25), 0,155 Teilen Methoxymethylcellulose, 0,155 Teilen Natriumbicarbonat, 0,043 Teilen Buten-2-ol (70%ig) und 0,1 Teile Zulauf 2 vorgelegt. Zulauf 2 besteht aus 1,795 Teilen Wasser und 0,135 Teilen Natriumperoxidisulfat. Die Vorlage wird unter Rühren auf 80 °C erwärmt und Zulauf 1 innerhalb von 4 Stunden gleichmässig zulaufen gelassen. Zulauf 1 besteht aus 17,7 Teilen Wasser, 3,86 Teilen 20%iger wässriger Lösung von ethoxyliertem Nonylphenol, 1,22 Teilen 35%iger wässriger Lösung von sulfatiertem ethoxyliertem p-Nonylphenol, 0,11 Teilen Acrylsäure, 25,74 Teilen Vinylpropionat und 17,2 Teilen tert.-Butylacrylat. Gleichzeitig wird innerhalb von 4,5 Stunden der restliche Zulauf 2 gleichmässig zudosiert. Während der Polymerisation wird die Reaktionstemperatur auf 80 bis 85 °C gehalten und diese Temperatur 1 Stunde zur Nachpolymerisation aufrechterhalten. Man kühlt dann auf 35 °C ab und fügt innerhalb von 10 min unter Rühren Zulauf 3, bestehend aus 0,064 Teilen Wasser, 0,018 Teilen 40%iger wässriger Paraffinsulfonatlösung ($C_{15}H_{31}SO_3Na$) und 0,028 Teilen tert.-Butylhydroperoxid (80%ig) sowie Zulauf 4, bestehend aus 0,1 Teilen Wasser und 0,02 Teilen Natriumformaldehydsulfoxilat zu. Man rührt noch eine halbe Stunde bei Normaldruck und dann weiter bei vermindertem Druck von 0,1 bar eine weitere Stunde. Anschliessend fügt man 0,325 Teile konzentrierten wässrigen Ammoniak zu. Erhalten wird eine 55%ige wässrige Copolymer-Dispersion mit dem LD-Wert 60%, dem pH-Wert 7,5 und einer Viskosität von 1 000 mPa.s, die auf Glas einen klaren glänzenden Film ergibt. Die Wasseraufnahme des Films beträgt nach 24 stündiger Lagerung bei 20 °C 22%. Die Mindestfilmbildetemperatur der Dispersion beträgt 15 °C und die Filme zeigen nach 500 Stunden im Xenon-Test keine Vergilbung.

B. Herstellung und Prüfung von zementhaltigen und zementfreien Bauklebern, Spachtelmassen und Putzen

Mit der nach A. hergestellten Polymer-Dispersion wird nach den Angaben von Tabelle 1 ein zementhaltiger und ein zementfreier Baukleber (Spachtelmasse) und ein Putz hergestellt. Zum Vergleich werden zementhaltige und zementfreie Baukleber (Spachtelmassen) und Putze aus einer handelsüblichen 50%gen wässrigen Styrol-n-butylacrylat-Copolymerisatdispersion (50:50) (B) und aus einer handelsüblichen 50%igen wässrigen Dispersion eines Copolymerisates aus 38% Vinylchlorid, 18% Ethylen und 44% Vinylacetat (C) sowie aus einem Gemisch aus gleichen Teilen (B) und (C) (=D) hergestellt. Unter Verwendung der Baukleber (Spachtelmassen) und Putze werden Vollwärmeschutz-Prüfkörper hergestellt, die folgenden Aufbau haben:
Asbestzementplatte 100 × 19 × 0,5 cm
Baukleber 2 kg/m$^2$
Polystyrolschaumstoffplatte 4 cm dick,

Tabelle 1

| Baukleber (Spachtelmasse) | zementhaltig Teile | zementfrei Teile |
|---|---|---|
| Polymer-Dispersion (Festgehalt 50 Gew.%) | | |
| (A bzw. B bzw. C bzw. D) | 200 | 140 |
| Testbenzin | 1 | 1 |
| Konservierungsmittel | 1 | 1 |
| Polyacrylsäure mit NH$_3$ neutr. | | |
| 1 % in Wasser | 100 | 100 |
| Calcit | 110 | 110 |
| Quarzsand ca. 60 % 0,3 mm | 604 | 604 |
| Zement PZ 35 F | 400 | – |
| | | |
| Putz | | |
| Polymer-Dispersion (Festgehalt 50 Gew.%) | | |
| (A bzw. B bzw. C bzw. D) | 128 | |
| Testbenzin | 10 | |
| Methylcellulose, 3 % in Wasser | 21 | |
| Tetrakaliumpyrophosphat, 50 %ig | 4,6 | |
| Konservierungsmittel | 2,5 | |
| Titandioxid | 45 | |
| Quarzmehl Wl | 330 | |
| | | |
| Weißgranulat | | |
| 0,35–0,7 mm | 43 | |
| 0,5 –1,5 mm | 22 | |
| 1 –2 mm | 117 | |
| 2,5 –4 mm | 74 | |
| Entschäumer 1:1 in Diisobutyl-adipinsäureester | 3,8 | |
| Paraffinwachsemulsion, 50 %ig | 2,5 | |
| Calciumcarbonat | 90 | |

Tabelle 2
Prüfergebnisse bei Vollwärmeschutz-Prüfkörpern

| Brandschachttest | Bindemittel | | | | | | | |
|---|---|---|---|---|---|---|---|---|
| | A | | B | | C | | D | |
| | zement-frei | zement-haltig | zement-frei | zement-haltig | zement-frei | zement-haltig | zement-frei | zement-haltig |
| Mittlere unzersetzte Restlänge (cm) | 40 | 40 | 0 | 5 | 40 | 45 | 15 | 20 |
| Max. Rauchgas-temperatur (°C) | 150 | 140 | 200 | 200 | 160 | 145 | 185 | 170 |
| Max. Flammenhöhe (cm) | 70 | 70 | 100 | 100 | 80 | 70 | 100 | 90 |
| Verschmutzung | gering | | gering | | stark | | stark | |

Dichte 0,015 g/cm$^3$ (PS 15 SE)
Spachtelmasse 4 kg/m$^2$
Glasseidengittergewebe 4 mm Fadenabstand
Putz ca. 3 kg/m$^2$.

Mit den Prüfkörpern werden Brandschachttests nach DIN 4102 durchgeführt. Die Ergebnisse sind in der Tabelle 2 angegeben.

Mit den zementhaltigen Bauklebern wird nach der Verordnung der MA 35 (Magistratsabteilung der Stadt Wien) für Aussenwanddämmsysteme mit Polystyrol und dünnen Putzen von 03.04.81 die Haftzugfestigkeit gemessen, sowie nach DIN 1164 die Verarbeitungszeit bestimmt. Die Ergebnisse sind in der folgenden Tabelle 3 zusammengestellt.

Tabelle 3
Prüfergebnisse der zementhaltigen Kleber

| Haftfestigkeit N / mm$^2$ | A | B | C | D |
|---|---|---|---|---|
| nach 28 Tagen | 2,4 | | 1,6 | |
| nach 24 Std. Wasserlagerung bei 20°C | 1,2 | nicht als Kleber einsetzbar | 0,8 | nicht als Kleber einsetzbar |
| nach 2 Tagen Trocknung | 2,4 | | 1,6 | |
| Verarbeitungszeit (Std.) | 6–8 | – | 6 | – |
| Abbindedauer (Std.) | 24 | | 24 | |

Schliesslich wurde noch die Verschmutzung der Putze nach 1jähriger Aussenbewitterung bestimmt. Sie erwies sich für die Bindemittel A und B als gering, für die Bindemittel C und D als stark.

**Patentansprüche**

1. Bindemittel für Baukleber, Spachtelmassen und Putze auf Basis von halogenfreien Emulsionscopolymerisaten von monoolefinisch ungesättigten Carbonsäureestern, dadurch gekennzeichnet, dass das Emulsionscopolymerisat aus
a) 55 bis 72 Gew.% Vinylpropionat,
b) 44,9 bis 27,5 Gew.% tert.-Butylacrylat,
c) 0,1 bis 0,5 Gew.% (Meth)acrylsäure und
d) 0 bis 17,5 Gew.% eines monoolefinisch ungesättigten Carbonsäureesters aus der Gruppe Vinylacetat, Methylacrylat und -methacrylat, n- und iso-Butylacrylat und -methacrylat und Dibutylmaleinat
aufgebaut ist, wobei die Angaben in Gew.% auf die Gesamtmenge der Monomeren bezogen sind.
2. Bindemittel nach Anspruch 1, dadurch gekennzeichnet, dass es durch Copolymerisation der Monomeren (a) bis (c) und gegebenenfalls (d) in wässriger Emulsion in Gegenwart von
e) 1,5 bis 4 Gew.% eines ethoxylierten Alkylphenols mit 8 bis 9 C-Atomen in der Alkylgruppe,
f) 0,75 bis 3 Gew.% eines sulfatierten, ethoxylierten Alkylphenols mit 8 bis 9 C-Atomen in der Alkylgruppe und
g) 0,1 bis 0,5 Gew.% eines Celluloseethers
hergestellt worden ist, wobei sich die Angaben in Gew.% auf die Gesamtmenge der Monomeren beziehen und die Gesamtmenge der Monomeren im Bereich von 35 bis 65 Gew.%, bezogen auf die Summe der Menge an Monomeren, Dispergierhilfsmittel und Wasser, liegt.
3. Verwendung von Bauklebern auf Basis von Bindemitteln gemäss Anspruch 2 für das Verkleben von Fliesen.

4. Verwendung von Bauklebern auf Basis von Bindemitteln gemäss Anspruch 2 für das Verkleben von Wärmedämmplatten.

**Claims**

1. A binder for building adhesives, troweling mixes and plasters which is based on a halogenfree emulsion copolymer of monoolefinically unsaturated carboxylates, wherein the emulsion copolymer comprises
(a) from 55 to 72% by weight of vinyl propionate,
(b) from 44.9 to 27.5% by weight of tert.-butyl acrylate,
(c) from 0.1 to 0.5% by weight of acrylic acid or methacrylic acid, and
(d) from 0 to 17.5% by weight of a monoolefinically unsaturated carboxylate from the group comprising vinyl acetate, methyl acrylate and methacrylate, n- and isobutyl acrylate and methacrylate and dibutyl maleate, the percentages being based on the total amount of the monomers.
2. A binder as claimed in claim 1, which has been prepared by copolymerization of monomers (a), (b) and (c) with or without (d), in aqueous emulsion in the presence of
(e) from 1.5 to 4% by weight of an oxyethylated alkylphenol, where alkyl is of 8 or 9 carbon atoms,
(f) from 0.75 to 3% by weight of a sulfated oxyethylated alkylphenol, where alkyl is of 8 or 9 carbon atoms, and
(g) from 0.1 to 0.5% by weight of a cellulose ether, the percentages being based on the total amount of the monomers, and the total amount of the monomers being from 35 to 65% by weight, based on the sum of the amounts of monomers, dispersants and water.
3. The use of building adhesives based on a binder as claimed in claim 2 for bonding tiles to substrates.

4. The use of building adhesives based on a binder as claimed in claim 2 for bonding thermal insulation boards to substrates.

**Revendications**

1. Liant à base de copolymères d'esters d'acides carboxyliques à insaturation mono-oléfinique, exempts d'halogènes, préparés par une copolymérisation en émulsion, pour colles pour le bâtiment, mastics et enduits, caractérisé en ce que le copolymère est constitué de

a) 55 à 72% en poids de propionate de vinyle,

b) 44,9 à 27,5% en poids d'acrylate de butyle tertiaire,

c) 0,1 à 0,5% en poids d'acide (méth)acrylique et

d) 0 à 17,5% en poids d'un ester d'acide carboxylique à insaturation mono-oléfinique choisi parmi l'acétate de vinyle, l'acrylate de méthyle, le méthacrylate de méthyle, l'acrylate n-butylique, l'acrylate iso-butylique, le méthacrylate n-butylique, le méthacrylate iso-butylique et le maléinate de dibutyle,

les pourcentages en poids se rapportant au poids total des monomères.

2. Liant suivant la revendication 1, caractérisé en ce qu'il a été préparé par une copolymérisation en émulsion aqueuse des monomères (a) à (c) et (d) éventuel en présence de

e) 1,5 à 4% en poids d'un alkyl(en $C_8$ ou $C_9$)-phénol éthoxylé,

f) 0,75 à 3% en poids d'un alkyl(en $C_8$ ou $C_9$)-phénol éthoxylé sulfaté et

g) 0,1 à 0,5% en poids d'un éther de cellulose, les pourcentages en poids se rapportant au poids total des monomères et le poids total des monomères étant compris entre 35 et 65% en poids par rapport à la somme des poids des monomères, des additifs de dispersion et de l'eau.

3. Utilisation de colles pour le bâtiment à base de liants suivant la revendication 2 pour la pose de carrelages.

4. Utilisation de colles pour le bâtiment à base de liants suivant la revendication 2 pour la pose de panneaux calorifuges.